# EUROPEAN PATENT SPECIFICATION

(11) **EP 3 586 615 B1**
(45) Date of publication and mention of the grant of the patent: **19.07.2023**
(21) Application number: 19182643.7
(22) Date of filing: 26.06.2019
(51) Int. Cl.: A01K 15/02

(54) **INTERACTIVE DEVICE FOR ANIMALS AND METHOD THEREFOR**
INTERAKTIVE VORRICHTUNG FÜR TIERE UND VERFAHREN DAFÜR
DISPOSITIF INTERACTIF POUR ANIMAUX ET PROCÉDÉ ASSOCIÉ

(30) Priority: 26.06.2018 US 201816018527
(43) Date of publication of application: 01.01.2020
(73) Proprietor: Tomofun Co., Ltd., Taipei City 105 (TW)
(72) Inventor: Hsu, Hsueh-Far, New Taipei City 231 (TW); Tseng, Chih-Hsin, New Taipei City 221 (TW); Wei, Hsien-Ching, New Taipei City 234 (TW); Chang, Yo Chen Victor, Taipei City 106 (TW); Luo, Kong-Che, New Taipei City 236 (TW)
(74) Representative: Michalski Hüttermann & Partner Patentanwälte mbB

(56) References cited:
- WO-A1-2014/134606
- WO-A2-2011/115442
- CN-U- 205 699 325
- GB-A- 2 480 271
- KR-B1- 101 710 282
- US-A1- 2006 219 187
- US-A1- 2011 018 994
- US-A1- 2017 326 428

## Description

### BACKGROUND OF THE APPLICATION

### Field of the Application

The application relates in general to an interactive device for animals and method therefor, and in particular, to an interactive device for animals and method therefor used for throwing an object.

### Description of the Related Art

Lots of people keep pets at home, but it is difficult to monitor the pet's behavior and the pet's physical condition when the pet owner leaves the pet home alone. Thus, some pet owners dispose a photography apparatus at home to observe the pet's behavior.

However, there can be no interaction with the pet when using a conventional photography apparatus, making it hard to attract the pet to approach the photography apparatus. Furthermore, the pet's physical condition may deteriorate from lack of exercise. Therefore, how to interact with the pet when the pet owner cannot stay with the pet has become an important issue.

US 2006/219187 A1 describes an integrated automatic device for training and feeding pet which also functions as a play mate while the owner is absent or otherwise engaged.

US 2011/018994 A1 describes a wirelessly controlled pet toy dispenser with camera that provides a user opportunity to view the user's pet from a remote location and to select a pet toy for dispensing and to select the timing of dispensing.

WO 2014/134606 A1 describes an animal interaction device that includes a food access component which allows and disallows access to at least a portion of the food.

GB 2480271 A describes a dummy for use in training animals having a scent.

CN 205699325 U describes a toy shooting apparatus.

US 2017/326428 A1 describes an automatic ball launcher for pets including a body shell, a ball launch aisle and a ball launch mechanism which is connected to the ball launch aisle and near the outlet for the ball.

KR 101710282 B1 describes a robot for pets and a control method thereof.

WO 2011/115442 A2 describes a ball play device for pets, comprising a housing having a ball inlet/outlet for feeding in or throwing a ball.

### BRIEF SUMMARY OF THE APPLICATION

The invention is defined by the features of the independent claims. Preferred embodiments are defined by the features of the dependent claims.

The following summary is illustrative only and is not intended to be limiting in any way. That is, the following summary is provided to introduce concepts, highlights, benefits, and advantages of the novel and non-obvious techniques described herein. Select, not all, implementations are described further in the detailed description below. Thus, the following summary is not intended to identify essential features of the claimed subject matter, nor is it intended for use in determining the scope of the claimed subject matter.

To address the deficiencies of conventional electronic products, an embodiment of the invention provides an interactive device for animals, comprising a main body, a circuit module, a video/audio transceiver, a driving module, a first pusher, and a first communicating member, wherein the circuit module, the video/audio transceiver, and the driving module are disposed on the main body, and the video/audio transceiver and the driving module are electrically connected to the circuit module. The main body has a recess and an opening. The first pusher is movably disposed in the recess and connected to the driving module. The first communicating member communicates the recess with the opening. When the driving module drives the first pusher to move along a first direction and protrude from an inner wall of the recess, the first pusher pushes an object in the recess into the first communicating member, and the object leaves the main body through the opening.

The interactive device for animals further comprises a second communicating member, a second pusher, and an elastic member. The second communicating member communicates the first communicating member and the opening. The second pusher for pushing the object out of the main body through the opening is movably disposed in the second communicating member and connected to the driving module. The elastic member is connected to the main body and the second pusher.

In some embodiments, the interactive device for animals further comprises a first communicating port, formed between the first communicating member and the second communication member, wherein the first communicating port is not covered by the second pusher.

In some embodiments, the interactive device for animals further comprises a motor, a gear assembly connected to the motor, and an intermittent gear connected to the gear assembly. The first pusher and the second pusher respectively comprise a gear rack. When the motor drives the gear assembly and the intermittent gear to rotate, the intermittent gear intermittently and repeatedly engages with the first pusher and the second pusher.

In some embodiments, the circuit module comprises a detecting unit for detecting the loading of the driving module. When the detecting unit detects that the driving module is in a low-loading state, the driving module stops driving the gear assembly.

In some embodiments, the circuit module comprises a detecting unit for detecting the loading of the driving module. When the detecting unit detects that the driving module is in a high-loading state, the driving module drives the first pusher to move along a second direction, wherein the second direction is opposite to the first direction.

In some embodiments, the interactive device for animals further comprises a stirring plate, disposed in the recess and connected to the driving module, wherein the stirring plate is rotatable relative to the main body.

In some embodiments, a longitudinal slot is formed on an inner surface of the recess, and the driving module drives the first pusher to move along the longitudinal slot and protrude from the inner wall of the recess.

In some embodiments, the interactive device for animals further comprises a sealer, and a second communicating port is formed between the recess and the first communicating member, wherein the sealer is pivotally connected to the driving module for sealing the second communicating port.

In some embodiments, the video/audio transceiver comprises camera, microphone, LED or speaker.

The interactive device for animals comprises an ejecting device, a network communication device and a controller is provided. The ejecting device comprises a recess for storing an object. The network communication device is configured to provide a network connection to a user device. The controller is coupled to the ejecting device and the network communication device and is configured to receive a control signal from the user device via the network communication device, and control an elastic member of the ejecting device to provide an elastic force to eject the object from an opening of the ejecting device according to the control signal.

In another aspect of the invention, an interactive method is provided, which is executed by an interactive device comprising an ejecting device storing an object and a network communication device providing a network connection to a user device. The interactive method comprises the steps of receiving a control signal from the user device via the network communication device; and controlling an elastic member of the ejecting device to provide an elastic force to eject the object from an opening of the ejecting device according to the control signal.

Other aspects and features of the application will become apparent to those with ordinary skill in the art upon review of the following descriptions of specific embodiments of the interactive devices for animals and methods thereof.

### BRIEF DESCRIPTION OF THE DRAWINGS

The application can be more fully understood by reading the subsequent detailed description and examples with references made to the accompanying drawings, wherein:
Fig. 1 is a schematic diagram of an interactive device for animals according to an embodiment of the invention;
Fig. 2 is an exploded-view diagram of the interactive device for animals in Fig. 1 without a main body and a cover;
Fig. 3A is a cross-sectional view taken along the line x-x in Fig. 1 ;
Fig. 3B is a top view of the interactive device for animals in Fig. 1 without a cover;
Fig. 4 is schematic diagram representing objects disposed in a recess according to an embodiment of the invention;
Fig. 5 is a schematic diagram representing a first pusher pushing an object out of the recess according to an embodiment of the invention;
Fig. 6 is a schematic diagram representing a second pusher moving from a first position to a second position according to an embodiment of the invention;
Fig. 7 is a schematic diagram representing an intermittent gear disengaging from the first and second pushers according to an embodiment of the invention;
Fig. 8 is a schematic diagram of the first pusher according to an embodiment of the invention;
Fig. 9 is a schematic diagram of an interactive device for animals according to another embodiment of the invention;
Figs. 10A and 10B are schematic diagrams of an interactive device for animals according to another embodiment of the invention;
Fig. 11 is a schematic diagram illustrating an exemplary environment for interacting with pets according to an embodiment of the invention;
Fig. 12 is a simplified functional block diagram illustrating the interactive device according to an embodiment of the invention;
Fig. 13 is a block diagram illustrating the cloud server according to an embodiment of the invention;
Fig. 14 is a flow diagram illustrating the interactive method according to an embodiment of the invention, wherein the interactive method may be used in the interactive device in FIGs. 11 and 12 ; and
Figs. 15A~15B are schematic views illustrating the user device showing image data and controlling the interactive device to eject a treat according to an embodiment of the present invention.

### DETAILED DESCRIPTION OF THE APPLICATION

The making and using of the embodiments of the interactive device for animals and the method thereof are discussed in detail below. It should be appreciated, however, that the embodiments provide many applicable inventive concepts that can be embodied in a wide variety of specific contexts. The specific embodiments discussed are merely illustrative of specific ways to make and use the embodiments, and do not limit the scope of the disclosure.

Unless defined otherwise, all technical and scientific terms used herein have the same meaning as commonly understood to one of ordinary skill in the art to which this invention belongs. It should be appreciated that each term, which is defined in a commonly used dictionary, should be interpreted as having a meaning conforming to the relative skills and the background or the context of the present disclosure, and should not be interpreted by an idealized or overly formal manner unless defined otherwise.

The following description is made for the purpose of illustrating the general principles of the invention and should not be taken in a limiting sense. It should be understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

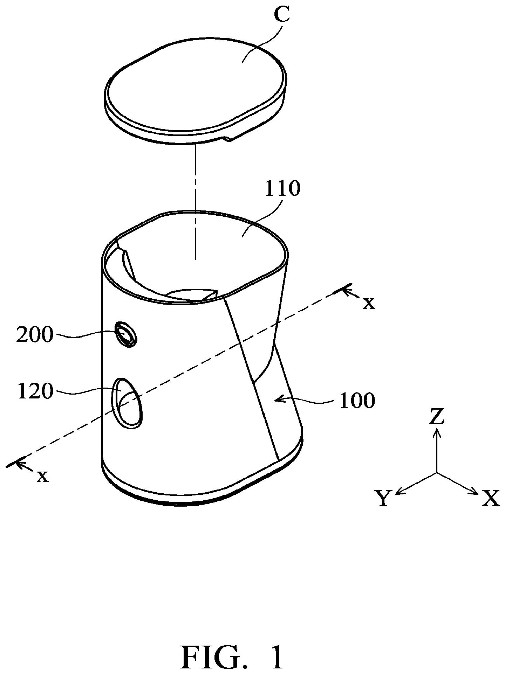

Referring to Fig. 1 , in an embodiment of the invention, a main body 100 of an interactive device for animals has a recess 110 and an opening 120 communicated with the recess 110, and a video/audio transceiver 200 (for example, a wireless web camera having an angle adjustable function) is disposed on the main body 100. The user can put objects used for interacting (such as the pet food or the toy balls) into the recess 110, and the objects can leave the main body 100 through the opening 120. Thus, the user can not only monitor the condition of the animals by receiving or transmitting the video/audio signal from the video/audio transceiver 200, but also throw the object through the opening 120 to interact with the pet.

As shown in Fig. 1, in this embodiment, a cover C detachably seals the recess 110 to prevent the animals from directly picking up the object (the food or the toy) therefrom. The video/audio transceiver 200 and the opening 200 face toward the same side, and the video/audio transceiver 200 comprises a microphone and a camera having a wireless communication function, therefore, the user can easily observe the behavior of the animals by the video/audio transceiver 200. In some embodiments, the video/audio transceiver 200 comprises a light emitting diode (LED) and a speaker, so that the animals can be attracted by the light or the sound of the user, and the interaction between the user and the animals can be improved.

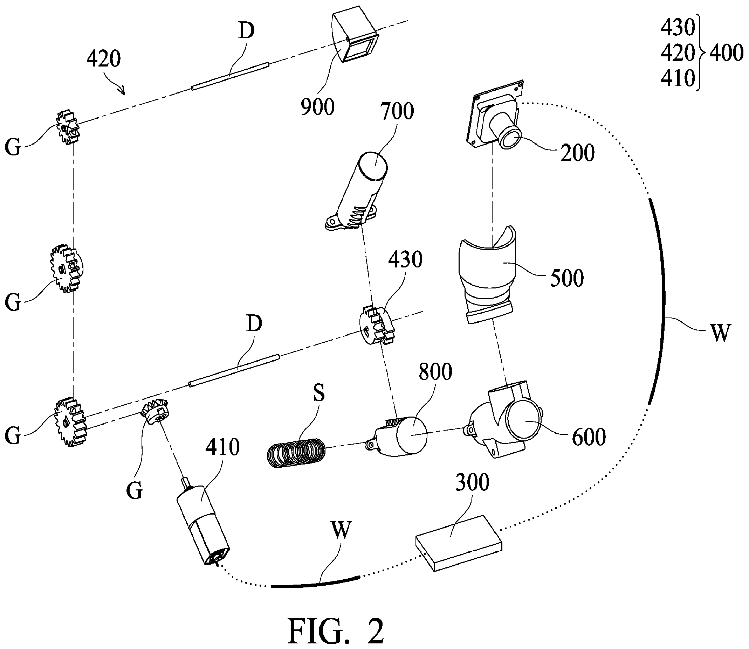

Referring to Fig. 2 , a circuit module 300, a driving module 400, a first communicating member 500, a second communicating member 600, a first pusher 700, a second pusher 800, a stirring plate 900, and an elastic member S are disposed in the main body 100 of the interactive device for animals, wherein the circuit module 300 is electrically connected to the driving module 400 and the video/audio transceiver 200 through respective wires W. In this embodiment, the driving module 400 comprises a motor 410, a gear assembly 420, and an intermittent gear 430. The gear assembly 420 comprises a plurality of gears G and a plurality of driving shafts D, and connects the motor 410, the intermittent gear 430, and the stirring plate 900. It should be noted that the position and the number of gears G and driving shafts D in the gear assembly 420 and the intermittent gear 430 can be adjusted as required, and are not limited to those illustrated in Fig. 2. In addition, the type and material of the intermittent gear 430 and the elastic member S can also be replaced as required. For example, the elastic member S can be replaced with another elastic member having a different coefficient of elasticity than the elastic member S.

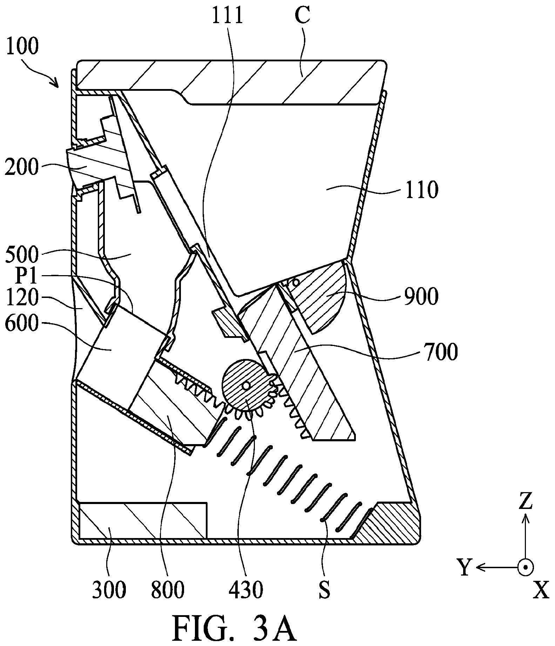

As shown in Fig. 3A , the first pusher 700 and the second pusher 800 respectively comprises a gear rack, and the intermittent gear 430 can rotate in a counterclockwise direction therebetween. Therefore, the intermittent gear 430 can intermittently and repeatedly engage with the first pusher 700 and the second pusher 800, and drive the first pusher 700 and the second pusher 800 to move.

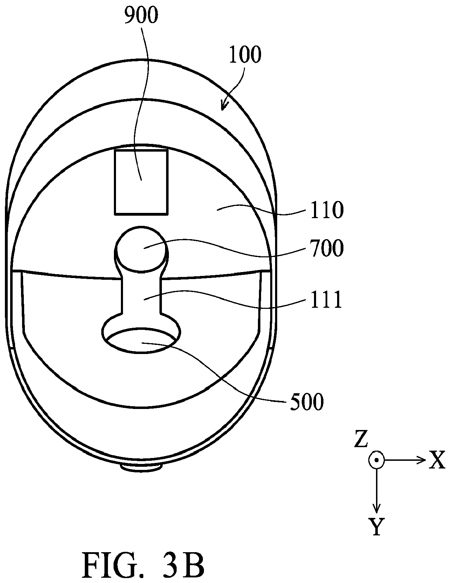

Referring to Fig. 3A, the opposite sides of the first communicating member 500 are respectively connected to the recess 110 and the second communicating member 600, and the second communicating member 600 is connected to the opening 120 of the main body 100. As shown in Figs. 3A and 3B , the first pusher 700 is disposed in the recess 110, and can move along a longitudinal guiding slot 111 on an inner surface of the recess 110. The second pusher 800 is movably disposed in the second communicating member 600. Furthermore, the opposite sides of the elastic member S (such as spring) respectively abut the second pusher 800 and the main body 100. The stirring plate 900 is disposed on the bottom side of the recess 110, and is rotatable relative to the main body 100.

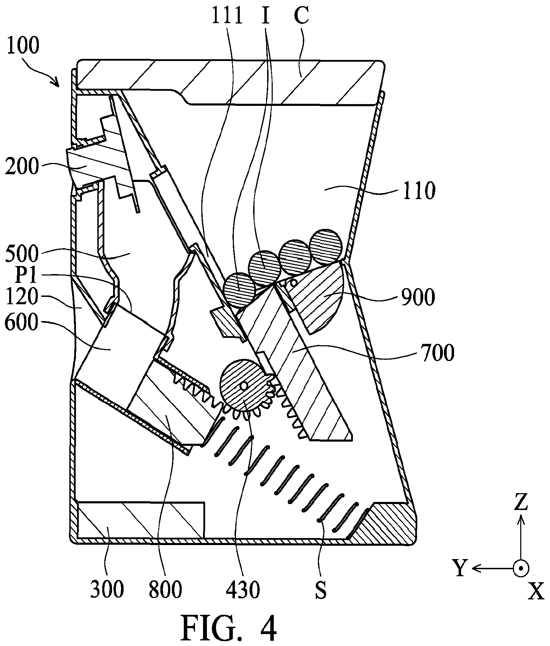

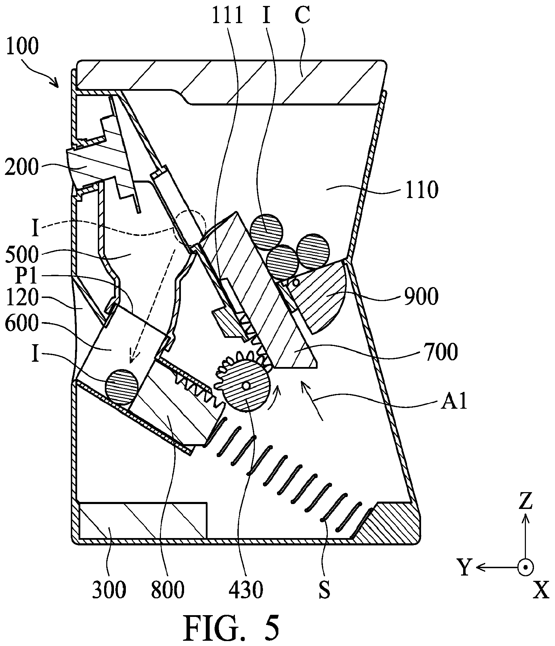

The operation of the interactive device for animals is described below. Referring to the Figs. 2 and 4 , the user can dispose a plurality of objects I in the recess 110 of the main body 100 in advance. Next, as shown in Fig. 2 , the user can use an external electronic device to remotely control the circuit module 300. The circuit module 300 transmits a signal to the motor 410 through the wire W to drive the gear assembly 420 rotating, and the gear assembly 420 drives the intermittent gear 430 and the stirring plate 900 to rotate subsequently. As shown in Fig. 5 , when the intermittent gear 430 rotates in the counterclockwise direction, it can drive the first pusher 700 moving along the guiding slot 111 in a first direction A1 and protruding from the inner wall of the recess 110. One object I is pushed out from the recess 110 and enters the first communicating member 500, and then drops into the second communicating member 600 through the first communicating member 500. In one embodiment, the recess 110 can be designed to gather treats at the center of the bottom of the recess 110.

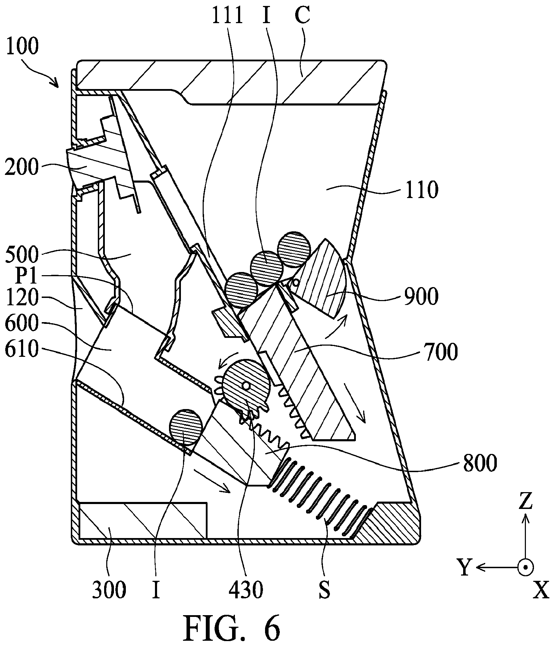

As shown in Fig. 6 , when the intermittent gear 430 keeps on rotating in the counterclockwise direction and engages with a second pusher 800, the intermittent gear 430 can drive the second pusher 800 to move from a first position along a bottom-right direction to a second position, compressing the elastic member S, and the object I in the second communicating member 600 slides along an inclined surface 610 and the bottom-right direction. Furthermore, since the first pusher 700 is disengaged from the intermittent gear 430, the first pusher 700 slides down along the guiding slot 111 to the position shown in Fig. 6 .

After the first pusher 700 slides down, the stirring plate 900 can be driven by the gear assembly 420 and rotate relative to the main body 100, such that the objects I in the recess 110 can be stirred. Therefore, the objects I can move to the position above the first pusher 700, and interference between the objects I can be prevented.

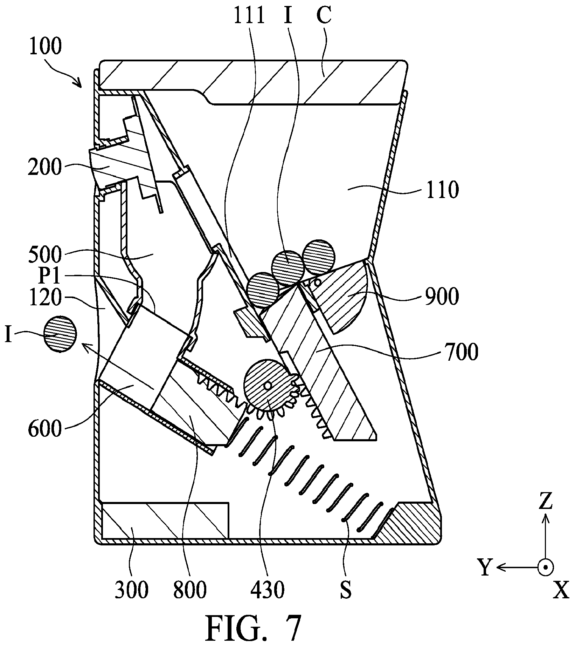

As shown in Fig. 7 , when the intermittent gear 430 keeps on rotating and is separated from the second pusher 800, the elastic member S provides an elastic force to push the second pusher 800 from the second position to the first position, and the object I is thrown out. The object I can leave the main body 100 through the opening 120.

Specifically, the circuit module 300 comprises a detecting unit (not shown). When the detecting unit detects that the motor 410 is in a low-loading state, the circuit module 300 transmits a signal to the motor 410 and the motor 410 stops operating. That is, as shown in Fig. 7 , when the intermittent gear 430 rotates in the counterclockwise direction to a position disengaged from the first pusher 700 and the second pusher 800, the motor 410 is in the low-loading state, the circuit module 300 transmits a signal to the motor 410, and the motor stops driving the gear assembly 420.

Moreover, in the process of pushing the object I along the first direction A1 by the first pusher 700, the interference between the first pusher 700 and the object I in the recess 110 may occur and the first pusher 700 cannot keep moving. At this time, the motor 410 cannot drive the first pusher 700 to move, and it is in a high-loading state. Therefore, when the detecting unit of the circuit module 300 detects that the motor 410 is in a high-loading state, the circuit module 300 transmits a signal to the motor 410 and the motor 410 drives the first pusher 700 to move along a second direction (opposite to the first direction A1) to the position shown in Fig. 4 , and then it moves along the first direction A1 again. If the interference still exists after the first pusher 700 alternately moves along the first direction A1 and second direction several times, the circuit module 300 transmits a signal to the motor 410 and the motor 410 stops operating.

In the process of moving the object I, the user can continually interact with the animals by the video/audio transceiver 200. For example, the user can make noise from the speaker to attract the animals, or observe the animals chasing the thrown object I by the camera.

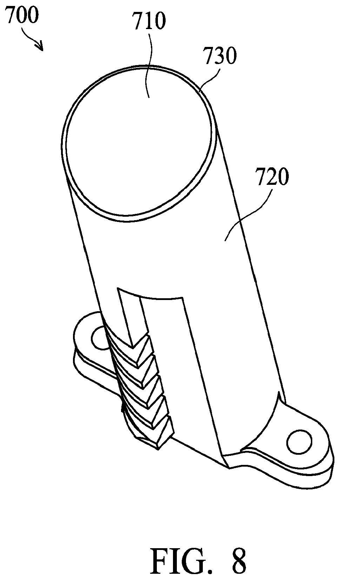

It should be noted that, an angle between the guiding slot 111 and the inner wall of the first communicating member 500 is about 20°-80° (30° for example), and the first communicating port P1 between the first and second communicating members 500 and 600 is not covered by the second pusher 800 when the second pusher 800 moves between the first position and the second position ( Figs. 7 and 8 ). Thus, the interference between the second pusher 800 and the object I can be prevented when the object I drops from the first communicating member 500.

Referring to Figs. 3B and 8 , the number of objects I pushed out from the recess 110 is primarily determined by the dimensions of the top surface 710 of the first pusher 700 and the width of the guiding slot 111. A round corner 730 is formed on the top surface 710 and a lateral surface 720 of the first pusher 700, so that the surplus objects I can easily drop, the number of objects I pushed out from the recess 110 can be precisely controlled.

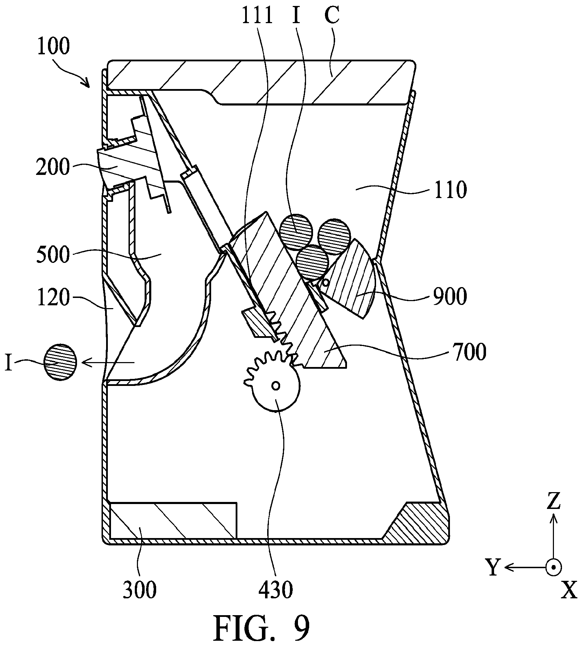

Referring to Fig. 9 , in another embodiment of the invention, the first communicating member 500 is directly connected to the opening 120 of the main body 100. Thus, the object I pushed out from the recess 110 can directly slide out of the main body 100 through the first communicating member 500.

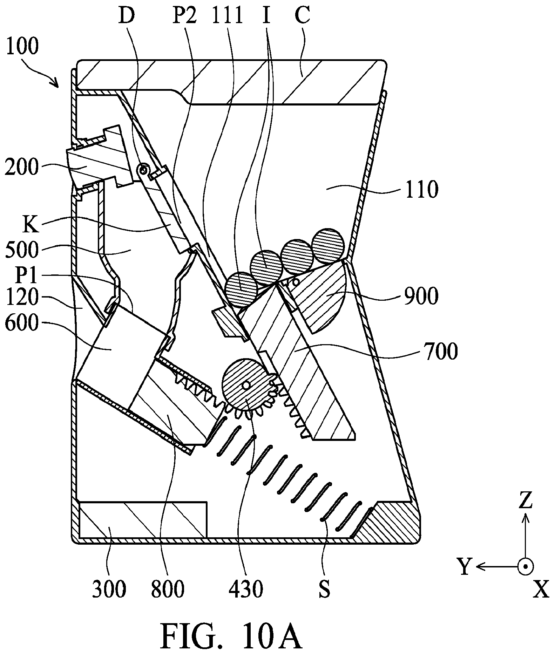

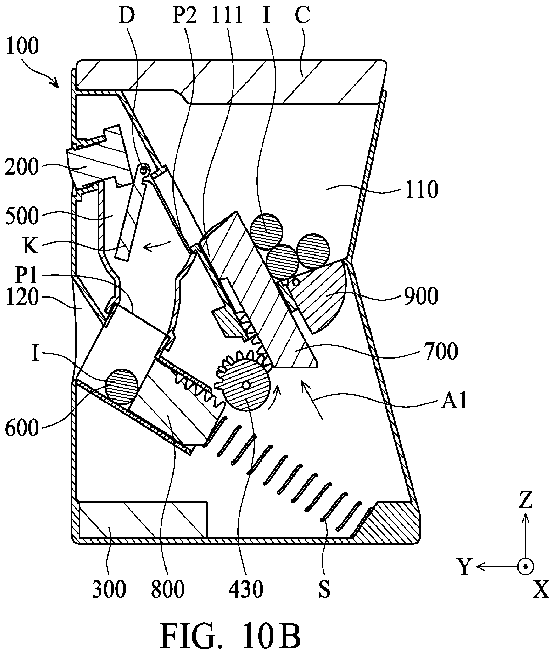

As shown in Fig. 10A, in another embodiment of the invention, the interactive device for animals further comprises a sealer K for sealing a second communicating port P2 between the recess 110 and the first communicating member 500, such that the ingress of insects can be prevented. As shown in Fig. 10B , when the object I is pushed out by the first pusher 700, the sealer K is driven by the driving module 400 and rotates relative to the second communicating port P2, such that the object I can leave the recess 110 and drop into the first communicating member 500.

Furthermore, in some embodiments, the second pusher 800 and the elastic member S can be replaced by an elastic sheet (not shown), the driving module 400 can directly provide a deformation force to deform the elastic sheet. When the deformation force is released and the shape of the elastic sheet is resumed, the object I can be thrown out of the main body 100 through the opening 120 by the elastic sheet.

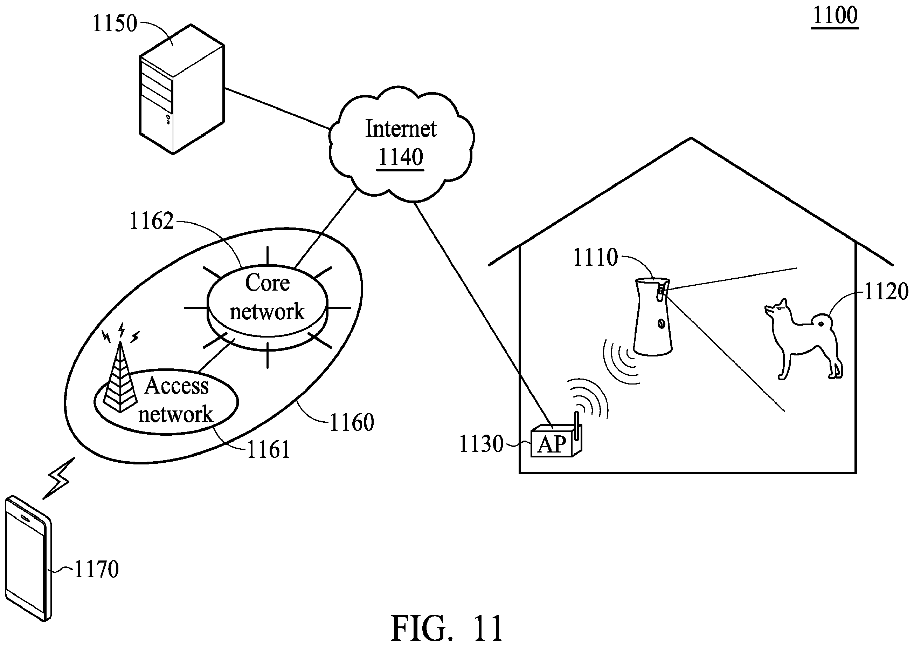

Fig. 11 is a schematic diagram illustrating an exemplary environment for interacting with pets according to an embodiment of the invention. The environment 1100 includes an interactive device 1110, a pet 1120, an Access Point (AP) 1130, the Internet 1140, a cloud server 1150, a telecommunication network 1160, and a user device 1170.

The interactive device 1110, the pet 1120, and the AP 1130 are disposed in the same indoor space, such as the home of a pet owner, wherein the interactive device 1110 is connected to the AP 1130 for obtaining access to the Internet 1140. That is, the interactive device 1110 may connect to the Internet 1140 via the AP 1130, and then further connect to the cloud server 1150 and/or the user device 1170 via the Internet 1140.

The interactive device 1110 may be utilized for realizing the interactive device in Figs. 1~10B , communicating with the cloud server 1150 and/or the user device 1170 via the AP 1130 and the Internet 1140, capturing images of a scene (e.g., an indoor space) and interacting with the pet 1120 through a built-in speaker or ejecting device. In one embodiment, the interactive device 1110 is also capable of processing image data and/or audio data to capture pet-related images or collect pet-related sounds that occur in the indoor space.

The pet 1120 may be a dog, a cat, or another animal.

The AP 1130 may be a network hardware device which provides wireless accesses using Short Range Wireless (SRW) technology, such as Wireless-Fidelity (Wi-Fi) technology. Specifically, the AP 1130 may connect to a local area network through an Ethernet cable, and then connect to the Internet 1140 via the local area network. The AP 1130 typically receives, buffers, and transmits data for the interactive device 1110.

The cloud server 1150 may be an electronic apparatus disposed on the Internet 1140, which is responsible for communicating with the interactive device 1110 and the user device 1170, including receiving image data and/or audio data from the interactive device 1110, sending notifications to the user device 1170, receiving interactive commands from the user device 1170, and forwarding the interactive commands to the interactive device 1110. In one embodiment, the cloud server 1150 is also capable of processing the image data and/or audio data from the interactive device 1110.

The telecommunication network 1160 may be a Global System for Mobile communications (GSM) network, a General Packet Radio Service (GPRS) network, an Enhanced Data rates for Global Evolution (EDGE) network, a Wideband Code Division Multiple Access (WCDMA) network, a Code Division Multiple Access 2000 (CDMA-2000) network, a Time Division-Synchronous Code Division Multiple Access (TD-SCDMA) network, a Worldwide Interoperability for Microwave Access (Wi-MAX) network, a Long Term Evolution (LTE) network, a Time-Division LTE (TD-LTE) network, or a LTE-Advanced (LTE-A) network, depending on the telecommunication technology in use.

Specifically, the telecommunication network 1160 includes an access network 1161 and a core network 1162, wherein the access network 1161 is responsible for processing radio signals, terminating radio protocols, and connecting the user device 1170 with the core network 1162, while the core network 1162 is responsible for performing mobility management, network-side authentication, and interfaces with public/external networks (e.g., the Internet 1140).

For example, if the telecommunication network 1160 is a GSM/GPRS/EDGE network, the access network 1161 may be a Base Station Subsystem (BSS) which includes at least a Base Transceiver Station (BTS) and a Base Station Controller (BSC), and the core network 1162 may be a GPRS core which includes at least a Home Location Register (HLR), a Serving GPRS Support Node (SGSN), and a Gateway GPRS Support Node (GGSN). If the service network 1120 is a WCDMA network, the access network 1161 may be a Universal Terrestrial Radio Access Network (UTRAN) which includes at least a Node-B (NB), and the core network 1162 may be a GPRS core which at least includes an HLR, a SGSN, and a GGSN. Alternatively, if the telecommunication network 1160 is an LTE/LTE-A/TD-LTE network, the access network 1161 may be an Evolved-UTRAN (E-UTRAN) which includes at least an evolved NB (eNB), and the core network 1162 may be an Evolved Packet Core (EPC) which includes a Home Subscriber Server (HSS), Mobility Management Entity (MME), Serving Gateway (S-GW), Packet Data Network Gateway (PDN-GW or P-GW).

The user device 1170 may be a smartphone, Personal Computer (PC), laptop computer, panel PC, or any computing device for the pet owner, which supports the telecommunication technology utilized by the telecommunication network 1160 and/or the SRW technology utilized by the AP 1130. In addition, the pet owner can download and install a dedicated pet-related interactive application (for convenience of understanding, the dedicated pet-related interactive application is also referred to as pet-related interactive APP) developed by a device manufacturer developing the interactive device 1110 in the user device 1170. The user device 1170 may receive notifications from or send interactive commands to the interactive device 1110 or the cloud server 1150 via the Internet 1140 and the telecommunication network 1160.

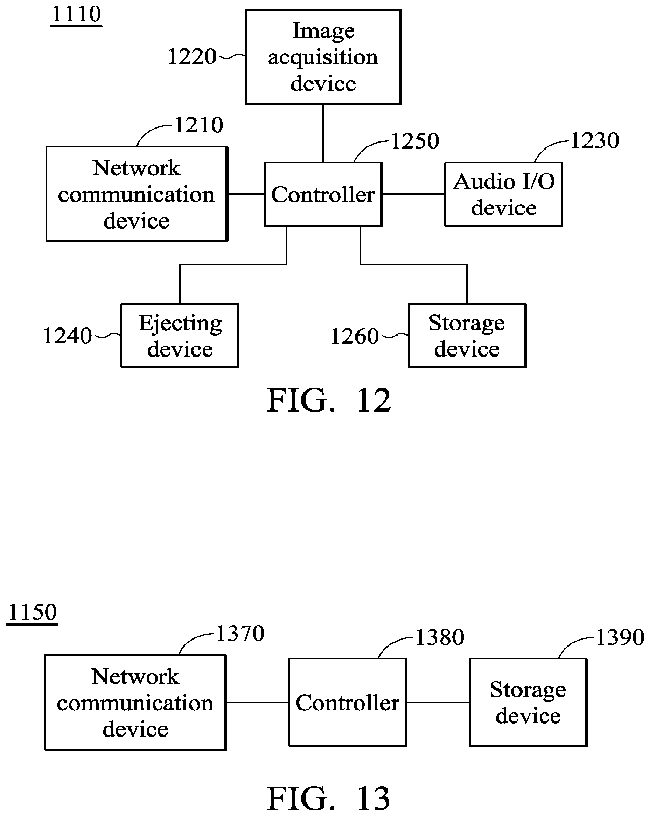

Fig. 12 is a simplified functional block diagram illustrating the interactive device 1110 according to an embodiment of the invention. The interactive device 1110 includes a network communication device 1210, an image acquisition device 1220, an audio Input/Output (I/O) device 1230, an ejecting device 1240, a controller 1250, and a storage device 1260, wherein the network communication device 1210, the image acquisition device 1220, the audio I/O device 1230, the ejecting device 1240, and the storage device 1260 are coupled to the controller 1250. The image acquisition device 1220 and audio I/O device 1230 may be utilized for realizing the video/audio transceiver 200 in Figs. 1~10B , and the network communication device 1210, the controller 1250 and the storage device 1260 may be utilized for realizing the circuit module 300 in Figs. 1~10B . The ejecting device 1240 may be utilized for realizing the remaining components included in the interactive device in Figs. 1~10B except for the video/audio transceiver 200 and the circuit module 300. For example, a recess included in the ejecting device 1240 is used for receiving and storing treats or toys for the pet 1120, and an elastic member of the ejecting device 1240 is used to provide an elastic force to eject treats or toys from an opening of the ejecting device 1240.

The network communication device 1210 is responsible for providing the function of wireless communications with the AP 1130 using SRW technology, such as Wi-Fi technology. Through the AP 1130, the network communication device 1210 may obtain network connections to the other devices on the Internet 1140, such as the cloud server 1150 and the user device 1170.

The image acquisition device 1220 has a Field of View (FOV) and is responsible for capturing images of a scene in the FOV. For example, the FOV may be greater than 180 degrees, so that the captured images may cover a wider portion of the scene. Alternatively, the FOV may be between 60 and 75 degrees, and the captured images may cover a narrower portion of the scene. Specifically, the image acquisition device 1220 may include one or more optics, such as a see-through lens, and/or image sensors.

In another embodiment, considering that the pet 1120 may be running around, the direction in which the image acquisition device 1220 is facing may be dynamically adjustable.

The audio I/O device 1230 may include a microphone for receiving audio (such as dog barking sounds) from the pet 1120, and a speaker for outputting audio from the pet owner. In one embodiment, the audio I/O device 1230 may further include a light emitting diode (LED) for emitting light of different colors to attract the pet 1120. For example, the LED can be controlled to emit blue light, white light or black light to attract dogs. In another embodiment, the audio I/O device 1230 can be configured to output light of any spectrum, including infrared light. For example, the audio I/O device 1230 can be controlled to output infrared light to attract cats.

The ejecting device 1240 is responsible for ejecting a treat or a toy to the pet 1120.

The controller 1250 may be a general-purpose processor, Micro-Control Unit (MCU), Digital Signal Processor (DSP), application processor, Graphics Processing Unit (GPU), Holographic Processing Unit (HPU), or Neural Processing Unit (NPU), or any combination thereof, which includes various circuits for providing the function of data (e.g., image data and/or audio data) processing/computing, controlling the network communication device 1210 for obtaining network connections, sending control signals to the image acquisition device 1220, receiving image data from the image acquisition device 1220, sending/receiving audio data from the audio I/O device 1230, controlling the ejecting device 1240 for ejecting a treat or toy, and storing and retrieving data to and from the storage device 1260.

In particular, the controller 1250 may coordinate the network communication device 1210, the image acquisition device 1220, the audio I/O device 1230, and the storage device 1260 for performing the interactive method of the present invention.

As will be appreciated by persons skilled in the art, the circuits in the controller 1250 will typically comprise transistors that are configured in such a way as to control the operation of the circuitry in accordance with the functions and operations described herein. As will be further appreciated, the specific structure or interconnections of the transistors will typically be determined by a compiler, such as a Register Transfer Language (RTL) compiler. RTL compilers may be operated by a processor upon scripts that closely resemble assembly language code, to compile the script into a form that is used for the layout or fabrication of the ultimate circuitry. Indeed, RTL is well known for its role and use in the facilitation of the design process of electronic and digital systems.

The storage device 1260 is a non-transitory machine-readable storage medium, including a memory, such as a FLASH memory or a Non-volatile Random Access Memory (NVRAM), or a magnetic storage device, such as a hard disk or a magnetic tape, or an optical disc, or any combination thereof for storing frame/image data and instructions or program code of communication protocols, applications, and/or the interactive method of the present invention.

It should be understood that the components described in the embodiment of Fig. 12 are for illustrative purposes only and are not intended to limit the scope of the invention. For example, the interactive device 1110 may include additional components, such as a power supply, an ambient light sensor, an Infra-Red (IR) sensor, and/or a Global Positioning System (GPS) device. The power supply may be a mobile/replaceable battery providing power to all the other components of the interactive device 1110. The ambient light sensor may be used to detect the lighting conditions of the surrounding environment. The IR sensor may be used to detect approaching objects. The GPS device may provide position information of the interactive device 1110 for use by some location-based services or applications.

Fig. 13 is a block diagram illustrating the cloud server 1150 according to an embodiment of the invention. The cloud server 1150 includes a network communication device 1370, a controller 1380, and a storage device 1390, wherein the network communication device 1370 and the storage device 1390 are coupled to the controller 1380.

The network communication device 1370 is responsible for providing the function of wired communications to connect to the Internet 1140 through an Ethernet, cable network, optical network, or Asymmetric Digital Subscriber Line (ADSL) network, and then connect to the other devices, such as the interactive device 1110 and the user device 1170, via the Internet 1140.

The controller 1380 may be a general-purpose processor, MCU, DSP, application processor, GPU, HPU, or NPU, or any combination thereof, which includes various circuits for providing the function of data (e.g., image data and/or audio data) processing/computing, controlling the network communication device 1370 for obtaining network connections, and storing and retrieving data to and from the storage device 1390.

In particular, the controller 1380 may coordinate the network communication device 1370 and the storage device 1390 for performing the interactive method of the present invention.

As will be appreciated by persons skilled in the art, the circuits in the controller 1380 will typically comprise transistors that are configured in such a way as to control the operation of the circuitry in accordance with the functions and operations described herein. As will be further appreciated, the specific structure or interconnections of the transistors will typically be determined by a compiler, such as an RTL compiler. RTL compilers may be operated by a processor upon scripts that closely resemble assembly language code, to compile the script into a form that is used for the layout or fabrication of the ultimate circuitry. Indeed, RTL is well known for its role and use in the facilitation of the design process of electronic and digital systems.

The storage device 1390 is a non-transitory machine-readable storage medium, including a memory, such as a FLASH memory or a NVRAM, or a magnetic storage device, such as a hard disk or a magnetic tape, or an optical disc, or any combination thereof for storing frame/image data and instructions or program code of communication protocols, applications, and/or the interactive method of the present invention.

It should be understood that the components described in the embodiment of Fig. 13 are for illustrative purposes only and are not intended to limit the scope of the invention. For example, the cloud server 1150 may include additional components, such as an I/O device, and/or a display device. The I/O device may include one or more buttons, a keyboard, a mouse, a touch pad, a microphone, a speaker, and/or a light device, etc., serving as the Man-Machine Interface (MMI) for receiving user inputs and/or outputting prompt/feedback signals. The display device may be a Liquid-Crystal Display (LCD), Light-Emitting Diode (LED) display, Organic LED (OLED) display, Electronic Paper Display (EPD), or Cathode Ray Tube (CRT) display, etc., for displaying visual content and/or texts.

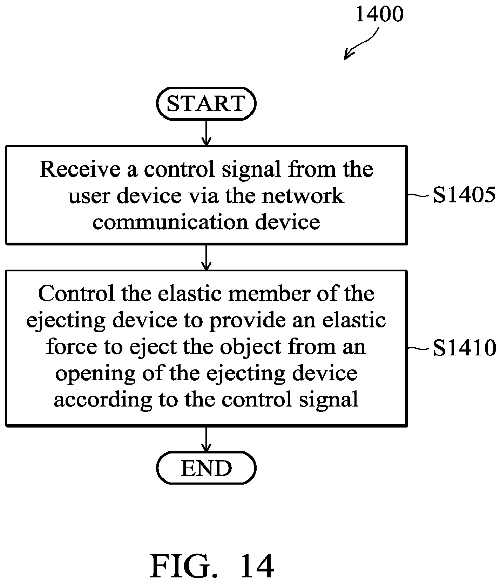

Fig. 14 is a flow diagram illustrating the interactive method 1400 according to an embodiment of the invention, wherein the interactive method 1400 may be used in the interactive device of Figs. 1~10B and the interactive device 1110 of FIGs. 11 and 12 . It should be noted that before the flow diagram, one or more objects (e.g., treats or toys) have been stored in the recess of the ejecting device 1240 included in the interactive device 1110.

In step S1405, the controller 1250 of the interactive device 1110 receives a control signal from the user device 1170 via the network communication device 1210. In step S1410, the controller 1250 of the interactive device 1110 controls the elastic member of the ejecting device 1240 to provide an elastic force to eject the object from an opening of the ejecting device 1240 according to the control signal.

In another embodiment, the controller 1250 may further control the audio I/O device 1230 to emit light of different colors or output audio to attract a pet when the controller 1250 receives a second control signal from the user device 1170 via the network communication device 1210, wherein the audio may include sound recordings, such as the sound of a dog barking, the voice of the pet owner, and other sounds which can attract a pet.

In another embodiment, the controller 1250 may transmit a notification to the user device 1170 via the network communication device 1210 when the audio I/O device 1230 receives audio from a pet. Specifically, the interactive device 1110 may collect audio data via the audio I/O device 1230, and process the audio data to determine whether the audio data meets a specific sound pattern (such as dog barking pattern). In response to determining that the audio data meets the specific sound pattern, the interactive device 1110 transmits the notification to the user device 1170 for notifying the pet owner that the pet is making a sound. The user device 1170 displays the notification to the pet owner when receiving the notification.

In an alternative embodiment, the interactive device 1110 may collect audio data via the audio I/O device 1230, and transmit the audio data to the cloud server 1150. The cloud server 1150 processes the audio data to determine whether the audio data meets a specific sound pattern (such as a dog barking pattern). In response to determining that the audio data meets the specific sound pattern, the cloud server 1150 transmits the notification to the user device 1170 for notifying the pet owner that the pet is making a sound. The user device 1170 displays the notification to the pet owner when receiving the notification.

In another embodiment, the controller 1250 of the interactive device 1110 may further adjust the ejecting direction of the ejecting device 1240 according to a third control signal transmitted by the user device 1170. Specifically, the controller 1250 may adjust an elevation angle of the second communicating member 600 according to the third control signal to change the ejection direction of the object.

In another embodiment, the controller 1250 of the interactive device 1110 may further control the ejecting device to eject the objects at different frequencies according to a fourth control signal transmitted by the user device 1170. Specifically, the controller 1250 may control the motor 410 to rotate the gear assembly 420 at a predefined speed of rotation, so that the ejecting device ejects the objects at a specific frequency corresponding to the predefined speed of rotation according to the fourth control signal. Furthermore, the user device 1170 and the cloud server 1150 may also transmit a fifth control signal to control the interactive device 1110 to eject the objects periodically.

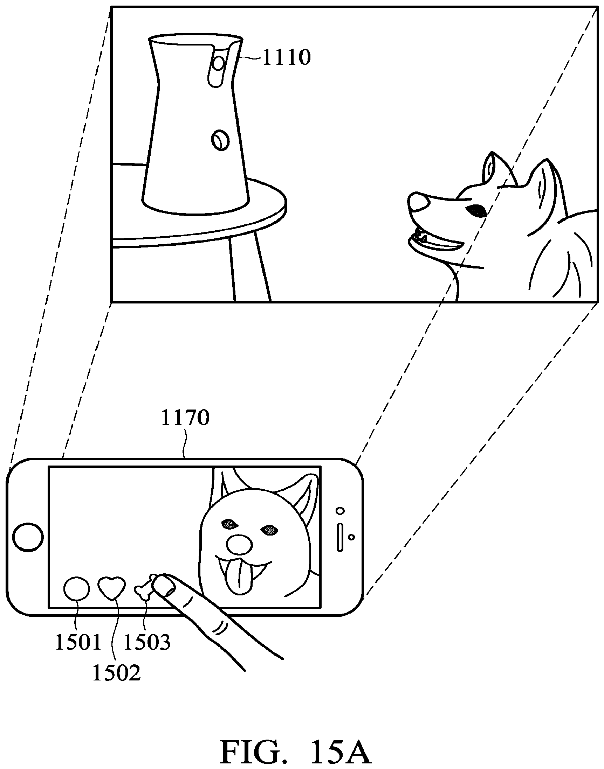

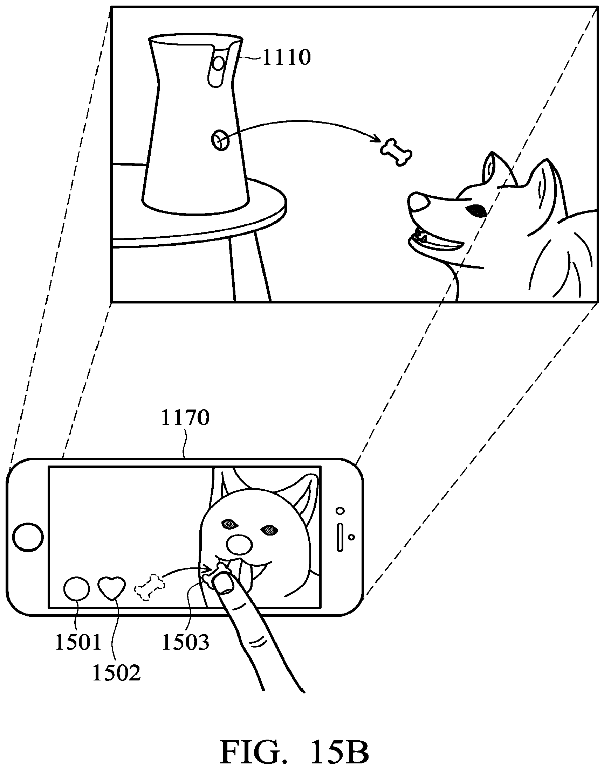

Figs. 15A~15B are schematic views illustrating the user device 1170 showing image data and controlling the interactive device 1110 to eject a treat according to an embodiment of the present invention. As shown in Fig. 15A , one or more different virtual treat icons 1501-1503 are shown on a touch screen of the user device 1170. The pet owner may select a virtual treat icon 1503 and input a control signal by sliding on the touch screen to throw the virtual treat icon 1503. Next, the user device 1170 transmits the control signal to the interactive device 1110. In Fig. 15B , the interactive device 1110 ejects the treat 1510 from the opening of the ejecting device after receiving the control signal transmitted by the user device 1170. At the same time, the virtual treat icon 1503 is also thrown toward the sliding direction of the pet owner's finger on the touchscreen.

In summary, an interactive device for animals and method therefor are provided. The interaction can be created by the video/audio transceiver or the method of throwing or ejecting the object. Furthermore, because the first pusher pushes the object along the first direction, the number of objects pushed out from the recess can be precisely controlled.

Although some embodiments of the present disclosure and their advantages have been described in detail, it should be understood that various changes, substitutions and alterations can be made herein without departing from the scope of the disclosure as defined by the appended claims. For example, it will be readily understood by those skilled in the art that many of the features, functions, processes, and materials described herein may be varied while remaining within the scope of the present disclosure. Moreover, the scope of the present disclosure is not intended to be limited to the particular embodiments of the process, machine, manufacture, compositions of matter, means, methods and steps described in the specification. As one of ordinary skill in the art will readily appreciate from the disclosure of the present disclosure, processes, machines, manufacture, compositions of matter, means, methods, or steps, presently existing or later to be developed, that perform substantially the same function or achieve substantially the same result as the corresponding embodiments described herein may be utilized according to the present disclosure. Accordingly, the appended claims are intended to include within their scope such processes, machines, manufacture, compositions of matter, means, methods, or steps. Moreover, the scope of the appended claims should be accorded the broadest interpretation so as to encompass all such modifications and similar arrangements.

Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

While the invention has been described by way of example and in terms of preferred embodiment, it is to be understood that the invention is not limited thereto. On the contrary, it is intended to cover various modifications and similar arrangements (as would be apparent to those skilled in the art). Therefore, the scope of the appended claims should be accorded the broadest interpretation to encompass all such modifications and similar arrangements.

## Claims

1. An interactive device (1110) for animals (1120), comprising:
an ejecting device (1240), comprising a recess (110) for storing an object (I), an opening (120), a second communicating member (600) connected to the opening (120), a first communicating member (500) of which opposite sides are respectively connected to the recess (110) and the second communicating member (600), a first pusher (700) disposed in the recess (110), a second pusher (800) movably disposed in the second communicating member (600), an elastic member (S) abutting the second pusher (800) and an intermittent gear (430) intermittently and repeatedly engaging with and thus driving the first pusher (700) and the second pusher (800), whereby the intermittent gear (430), when rotating in the counterclockwise direction, drives the first pusher (700) to move along in a first direction (A1) and protrudes from the inner wall of the recess (110) for pushing the object (I) out from the recess (110) into the first communicating member (500) so that the object (I) drops through the first communicating member (500) into the second communicating member (600);
a network communication device (1210), configured to provide a network connection to a user device (1170); and
a controller (1250), coupled to the ejecting device (1240) and the network communication device (1210), configured to receive a control signal from the user device (1170) via the network communication device (1210), and control the elastic member (S) to provide an elastic force to eject the object (I) from the opening (120) according to the control signal.

2. The interactive device (1110) for animals (1120) of claim 1, further comprising: an audio I/O device (1230), coupled to the controller (1250), wherein the controller (1250) controls the audio I/O device (1230) to emit light of different colors to attract a pet (1120) when the controller (1250) receives a second control signal from the user device (1170) via the network communication device (1210).

3. The interactive device (1110) for animals (1120) of claim 1, further comprising: an audio I/O device (1230), coupled to the controller (1250), wherein the controller (1250) controls the audio I/O device (1230) to output audio according to a second control signal to attract a pet (1120) when the controller (1250) receives the second control signal from the user device (1170) via the network communication device (1210).

4. The interactive device (1110) for animals (1120) of claim 1, further comprising: an audio I/O device (1230), coupled to the controller (1250), wherein the controller (1250) transmits a notification to the user device (1170) via the network communication device (1210) when the audio I/O device (1230) receives audio from a pet (1120).

5. The interactive device (1110) for animals (1120) of claim 1, wherein the controller (1250) is further configured to adjust an ejecting direction of the ejecting device (1240).

6. The interactive device (1110) for animals (1120) of claim 1, wherein the controller (1250) further controls the ejecting device (1240) to eject the object (I) at different frequencies.

7. An interactive method for animals (1120), executed by an interactive device (1110) comprising an ejecting device (1240) for storing an object (I) and a network communication device (1210) providing a network connection to a user device (1170), whereby
the ejecting device (1240) comprises a recess (110) for storing the object (I), an opening (120), a second communicating member (600) connected to the opening (120), a first communicating member (500) of which opposite sides are respectively connected to the recess (110) and the second communicating member (600), a first pusher (700) disposed in the recess (110), a second pusher (800) movably disposed in the second communicating member (600), an elastic member (S) abutting the second pusher (800) and an intermittent gear (430) intermittently and repeatedly engaging with and thus driving the first pusher (700) and the second pusher (800), whereby the intermittent gear (430), when rotating in the counterclockwise direction, drives the first pusher (700) to move along in a first direction (A1) and protrudes from the inner wall of the recess (110) for pushing the object (I) out from the recess (110) into the first communicating member (500) so that the object (I) drops through the first communicating member (500) into the second communicating member (600); and the interactive method comprising:
receiving a control signal from the user device (1170) via the network communication device (1210); and
controlling the elastic member (S) to provide an elastic force to eject the object (I) from the opening (120) according to the control signal.

8. The interactive method for animals (1120) of claim 7, wherein the interactive device (1110) further comprises an audio I/O device (1230), the interactive method further comprising:
receiving a second control signal from the user device (1170) via the network communication device (1210); and
controlling the audio I/O device (1230) to emit light of different colors to attract a pet (1120).

9. The interactive method for animals (1120) of claim 7, wherein the interactive device (1110) further comprises an audio I/O device (1230), the interactive method further comprising:
receiving a second control signal from the user device (1170) via the network communication device (1210); and
controlling the audio I/O device (1230) to output audio according to the second control signal to attract a pet (1120).

10. The interactive method for animals (1120) of claim 7, wherein the interactive device (1110) further comprises an audio I/O device (1230), the interactive method further comprising:
transmitting a notification to the user device (1170) via the network communication device (1210) when the audio I/O device (1230) receives audio from a pet (1120).

11. The interactive method for animals (1120) of claim 7, further comprising:
adjusting an ejecting direction of the ejecting device (1240) according to the control signal.

12. The interactive method for animals (1120) of claim 7, further comprising:
controlling the ejecting device (1240) to eject the object (I) according to different frequencies according to the control signal.

## Patentansprüche

1. Interaktive Vorrichtung (1110) für Tiere (1120), mit:
einer Ausstoßeinrichtung (1240), die eine Vertiefung (110) zum Aufnehmen eines Objekts (I), eine Öffnung (120), ein mit der Öffnung (120) verbundenes zweites Kommunikationselement (600), ein erstes Kommunikationselement (500), dessen gegenüberliegende Seiten jeweils mit der Vertiefung (110) und dem zweiten Kommunikationselement (600) verbunden sind, eine in der Vertiefung (110) angeordnete erste Drückeinrichtung (700), eine im zweiten Kommunikationselement (600) beweglich angeordnete zweite Drückeinrichtung (800) ein elastisches Element (S), das an der zweiten Drückeinrichtung (800) anliegt, und ein intermittierendes Zahnrad (430) aufweist, das intermittierend und wiederholt mit der ersten Drückeinrichtung (700) und der zweiten Drückeinrichtung (800) in Eingriff kommt und diese dadurch antreibt, wodurch das intermittierende Zahnrad (430), wenn es sich im Gegenuhrzeigersinn dreht, die erste Drückeinrichtung (700) antreibt, so dass sie sich entlang einer ersten Richtung (A1) bewegt und von der Innenwand der Vertiefung (110) hervorsteht, um das Objekt (I) aus der Vertiefung (110) in das erste Kommunikationselement (500) zu drücken, so dass das Objekt (I) durch das erste Kommunikationselement (500) in das zweite Kommunikationselement (600) fällt;
einer Netzwerkkommunikationseinrichtung (1210), die dafür konfiguriert ist, eine Netzwerkverbindung zu einem Benutzergerät (1170) bereitzustellen; und
einer Steuereinheit (1250), die mit der Ausstoßeinrichtung (1240) und der Netzwerkkommunikationseinrichtung (1210) verbunden und dafür konfiguriert ist, ein Steuersignal vom Benutzergerät (1170) über die Netzwerkkommunikationseinrichtung (1210) zu empfangen und das elastische Element (S) derart zu steuern, dass es eine elastische Kraft zum Ausstoßen des Objekts (I) gemäß dem Steuersignal aus der Öffnung (120) bereitstellt.

2. Interaktive Vorrichtung (1110) für Tiere (1120) nach Anspruch 1, ferner mit:
einer mit der Steuereinheit (1250) verbundenen Audio-E/A-Einrichtung (1230),
wobei die Steuereinheit (1250) die Audio-E/A-Einrichtung (1230) derart steuert, dass sie Licht in verschiedenen Farben emittiert, um ein Haustier (1120) anzulocken, wenn die Steuereinheit (1250) über die Netzwerkkommunikationseinrichtung (1210) ein zweites Steuersignal vom Benutzergerät (1170) empfängt.

3. Interaktive Vorrichtung (1110) für Tiere (1120) nach Anspruch 1, ferner mit:
einer mit der Steuereinheit (1250) verbundenen Audio-E/A-Einrichtung (1230), wobei die Steuereinheit (1250) die Audio-E/A-Einrichtung (1230) steuert, um ein Audiosignal gemäß einem zweiten Steuersignal auszugeben, um ein Haustier (1120) anzulocken, wenn die Steuereinheit (1250) über die Netzwerkkommunikationseinrichtung (1210) das zweite Steuersignal vom Benutzergerät (1170) empfängt.

4. Interaktive Vorrichtung (1110) für Tiere (1120) nach Anspruch 1, ferner mit:
einer mit der Steuereinheit (1250) verbundenen Audio-E/A-Einrichtung (1230), wobei die Steuereinheit (1250) eine Benachrichtigung an das Benutzergerät (1170) über die Netzwerkkommunikationseinrichtung (1210) überträgt, wenn die Audio-E/A-Einrichtung (1230) eine Audioeingabe von einem Haustier (1120) empfängt.

5. Interaktive Vorrichtung (1110) für Tiere (1120) nach Anspruch 1, wobei die Steuereinheit (1250) ferner dafür konfiguriert ist, eine Ausstoßrichtung der Ausstoßeinrichtung (1240) einzustellen.

6. Interaktive Vorrichtung (1110) für Tiere (1120) nach Anspruch 1, wobei die Steuereinheit (1250) ferner die Ausstoßeinrichtung (1240) steuert, um das Objekt (I) mit unterschiedlichen Frequenzen auszustoßen.

7. Interaktives Verfahren für Tiere (1120), das durch eine interaktive Vorrichtung (1110) ausgeführt wird, die eine Ausstoßeinrichtung (1240) zum Aufnehmen eines Objekts (I) und eine Netzwerkkommunikationseinrichtung (1210) aufweist, die eine Netzwerkverbindung zu einem Benutzergerät (1170) bereitstellt,
wobei die Ausstoßeinrichtung (1240) eine Vertiefung (110) zum Aufnehmen des Objekts (I), eine Öffnung (120), ein zweites Kommunikationselement (600), das mit der Öffnung (120) verbunden ist, ein erstes Kommunikationselement (500), dessen gegenüberliegende Seiten jeweils mit der Vertiefung (10) und dem zweiten Kommunikationselement (600) verbunden sind, eine erste Drückeinrichtung (700), die in der Vertiefung (110) angeordnet ist, eine zweite Drückeinrichtung (800), die beweglich im zweiten Kommunikationselement (600) angeordnet ist, ein elastisches Element (S), das an der zweiten Drückeinrichtung (800) anliegt, und ein intermittierendes Zahnrad (430) aufweist, das intermittierend und wiederholt mit der ersten Drückeinrichtung (700) und der zweiten Drückeinrichtung (800) in Eingriff kommt und diese dadurch antreibt, wodurch das intermittierende Zahnrad (430), wenn es sich im Uhrzeigersinn dreht, die erste Drückeinrichtung (700) antreibt, so dass sie sich entlang einer ersten Richtung (A1) bewegt und von der Innenwand der Vertiefung (110) hervorsteht, um das Objekt (I) aus der Vertiefung (110) in das erste Kommunikationselement (500) zu drücken, so dass das Objekt (I) durch das erste Kommunikationselement (500) in das zweite Kommunikationselement (600) fällt; und
wobei das interaktive Verfahren die Schritte aufweist:
Empfangen eines Steuersignals vom Benutzergerät (1170) über die Netzwerkkommunikationseinrichtung (1210); und
Steuern des elastischen Elements (S) zum Bereitstellen einer elastischen Kraft zum Ausstoßen des Objekts (I) aus der Öffnung (120) gemäß dem Steuersignal.

8. Interaktives Verfahren für Tiere (1120) nach Anspruch 7, wobei die interaktive Vorrichtung (1110) ferner eine Audio-E/A-Einrichtung (1230) aufweist, wobei das interaktive Verfahren ferner die Schritte aufweist:
Empfangen eines zweiten Steuersignals vom Benutzergerät (1170) über die Netzwerkkommunikationseinrichtung (1210); und
Steuern der Audio-E/A-Einrichtung (1230) zum Emittieren von Licht in verschiedenen Farben, um ein Haustier (1120) anzulocken.

9. Interaktives Verfahren für Tiere (1120) nach Anspruch 7, wobei die interaktive Vorrichtung (1110) ferner eine Audio-E/A-Einrichtung (1230) aufweist, wobei das interaktive Verfahren ferner die Schritte aufweist:
Empfangen eines zweiten Steuersignals vom Benutzergerät (1170) über die Netzwerkkommunikationseinrichtung (1210); und
Steuern der Audio-E/A-Einrichtung (1230) zum Ausgeben eines Audiosignals gemäß dem zweiten Steuersignal, um ein Haustier (1120) anzulocken.

10. Interaktives Verfahren für Tiere (1120) nach Anspruch 7, wobei die interaktive Vorrichtung (1110) ferner eine Audio-E/A-Einrichtung (1230) aufweist, wobei das interaktive Verfahren ferner die Schritte aufweist:
Übertragen einer Benachrichtigung über die Netzwerkkommunikationseinrichtung (1210) an das Benutzergerät (1170), wenn die Audio-E/A-Einrichtung (1230) eine Audioeingabe von einem Haustier (1120) empfängt.

11. Interaktives Verfahren für Tiere (1120) nach Anspruch 7, ferner mit dem Einstellen einer Ausstoßrichtung der Ausstoßeinrichtung (1240) gemäß dem Steuersignal.

12. Interaktives Verfahren für Tiere (1120) nach Anspruch 7, ferner mit dem Steuern der Ausstoßeinrichtung (1240) zum Ausstoßen des Objekts (I) gemäß dem Steuersignal mit unterschiedlichen Frequenzen.

## Revendications

1. Dispositif interactif (1110) pour animaux (1120), comprenant :
un dispositif d'éjection (1240), comprenant un évidement (110) pour stocker un objet (I), une ouverture (120), un second élément de communication (600) relié à l'ouverture (120), un premier élément de communication (500) dont les côtés opposés sont respectivement reliés à l'évidement (110) et au second élément de communication (600), un premier dispositif de poussée (700) disposé dans l'évidement (110), un second dispositif de poussée (800) disposé de façon mobile dans le second élément de communication (600), un élément élastique (S) venant en butée contre le second dispositif de poussée (800) et une roue d'engrenage intermittente (430) venant en prise de manière intermittente et répétée avec, et ainsi entraînant, le premier dispositif de poussée (700) et le second dispositif de poussée (800),
moyennant quoi la roue d'engrenage intermittente (430), lorsqu'elle tourne dans le sens antihoraire, entraîne le premier dispositif de poussée (700) à se déplacer le long d'une première direction (A1) et fait saillie depuis la paroi interne de l'évidement (110) pour pousser l'objet (I) hors de l'évidement (110) dans le premier élément de communication (500) de sorte que l'objet (1) chute à travers le premier élément de communication (500) dans le second élément de communication (600) ;
un dispositif de communication réseau (1210), conçu pour fournir une connexion réseau à un dispositif utilisateur (1170) ; et
un dispositif de commande (1250), couplé au dispositif d'éjection (1240) et au dispositif de communication réseau (1210), conçu pour recevoir un signal de commande depuis le dispositif utilisateur (1170) au moyen du dispositif de communication réseau (1210), et commander à l'élément élastique (S) de fournir une force élastique afin d'éjecter l'objet (I) de l'ouverture (120) selon le signal de commande.

2. Dispositif interactif (1110) pour animaux (1120) selon la revendication 1, comprenant en outre : un dispositif d'entrée/sortie audio (1230), couplé au dispositif de commande (1250), dans lequel le dispositif de commande (1250) commande au dispositif d'entrée/sortie audio (1230) d'émettre de la lumière de différentes couleurs pour attirer un animal de compagnie (1120) lorsque le dispositif de commande (1250) reçoit un second signal de commande depuis le dispositif utilisateur (1170) au moyen du dispositif de communication réseau (1210).

3. Dispositif interactif (1110) pour animaux (1120) selon la revendication 1, comprenant en outre: un dispositif d'entrée/sortie audio (1230), couplé au dispositif de commande (1250), dans lequel le dispositif de commande (1250) commande au dispositif d'entrée/sortie audio (1230) d'émettre de l'audio selon un second signal de commande pour attirer un animal de compagnie (1120) lorsque le dispositif de commande (1250) reçoit le second signal de commande depuis le dispositif utilisateur (1170) au moyen du dispositif de communication réseau (1210).

4. Dispositif interactif (1110) pour animaux (1120) selon la revendication 1, comprenant en outre : un dispositif d'entrée/sortie audio (1230), couplé au dispositif de commande (1250), dans lequel le dispositif de commande (1250) transmet une notification au dispositif utilisateur (1170) au moyen du dispositif de communication réseau (1210) lorsque le dispositif d'entrée/sortie audio (1230) reçoit de l'audio depuis un animal de compagnie (1120).

5. Dispositif interactif (1110) pour animaux (1120) selon la revendication 1, dans lequel le dispositif de commande (1250) est en outre configuré pour ajuster une direction d'éjection du dispositif d'éjection (1240).

6. Dispositif interactif (1110) pour animaux (1120) selon la revendication 1, dans lequel le dispositif de commande (1250) commande en outre au dispositif d'éjection (1240) d'éjecter l'objet (I) à différentes fréquences.

7. Procédé interactif pour animaux (1120), exécuté par un dispositif interactif (1110) comprenant un dispositif d'éjection (1240) pour le stockage d'un objet (I) et un dispositif de communication réseau (1210) fournissant une connexion réseau à un dispositif utilisateur (1170), moyennant quoi
le dispositif d'éjection (1240) comprend un évidement (110) pour stocker l'objet (I), une ouverture (120), un second élément de communication (600) relié à l'ouverture (120), un premier élément de communication (500) dont les côtés opposés sont respectivement reliés à l'évidement (110) et au second élément de communication (600), un premier dispositif de poussée (700) disposé dans l'évidement (110), un second dispositif de poussée (800) disposé de façon mobile dans le second élément de communication (600), un élément élastique (S) venant en butée contre le second dispositif de poussée (800) et une roue d'engrenage intermittente (430) venant en prise de manière intermittente et répétée avec, et ainsi entraînant, le premier dispositif de poussée (700) et le second dispositif de poussée (800), moyennant quoi la roue d'engrenage intermittente (430), lorsqu'elle tourne dans le sens antihoraire, entraîne le premier dispositif de poussée (700) à se déplacer le long d'une première direction (A1) et fait saillie depuis la paroi interne de l'évidement (110) pour pousser l'objet (I) hors de l'évidement (110) dans le premier élément de communication (500) de sorte que l'objet (1) chute à travers le premier élément de communication (500) dans le second élément de communication (600) ; et le procédé interactif comprenant :
la réception d'un signal de commande depuis le dispositif utilisateur (1170) au moyen du dispositif de communication réseau (1210) ; et
la commande à l'élément élastique (S) de fournir une force élastique pour éjecter l'objet (I) de l'ouverture (120) selon le signal de commande.

8. Procédé interactif pour animaux (1120) selon la revendication 7, dans lequel le dispositif interactif (1110) comprend en outre un dispositif d'entrée/sortie audio (1230), le procédé interactif comprenant en outre :
la réception d'un second signal de commande depuis le dispositif utilisateur (1170) au moyen du dispositif de communication réseau (1210) ; et
la commande au dispositif d'entrée/sortie audio (1230) d'émettre de la lumière de différentes couleurs pour attirer un animal de compagnie (1120).

9. Procédé interactif pour animaux (1120) selon la revendication 7, dans lequel le dispositif interactif (1110) comprend en outre un dispositif d'entrée/sortie audio (1230), le procédé interactif comprenant en outre :
la réception d'un second signal de commande depuis le dispositif utilisateur (1170) au moyen du dispositif de communication réseau (1210) ; et
la commande au dispositif d'entrée/sortie audio (1230) d'émettre de l'audio selon le second signal de commande pour attirer un animal de compagnie (1120).

10. Procédé interactif pour animaux (1120) selon la revendication 7, dans lequel le dispositif interactif (1110) comprend en outre un dispositif d'entrée/sortie audio (1230), le procédé interactif comprenant en outre :
la transmission d'une notification au dispositif utilisateur (1170) au moyen du dispositif de communication réseau (1210) lorsque le dispositif d'entrée/sortie audio (1230) reçoit de l'audio depuis un animal de compagnie (1120).

11. Procédé interactif pour animaux (1120) selon la revendication 7, comprenant en outre :
l'ajustement d'une direction d'éjection du dispositif d'éjection (1240) selon le signal de commande.

12. Procédé interactif pour animaux (1120) selon la revendication 7, comprenant en outre :
la commande au dispositif d'éjection (1240) d'éjecter l'objet (I) selon différentes fréquences selon le signal de commande.
